# EUROPEAN PATENT APPLICATION

(11) **EP 4 708 148 A1**
(43) Date of publication of application: **11.03.2026**
(21) Application number: 25774684.2
(22) Date of filing: 24.03.2025
(51) Int. Cl.: G06N 3/096, G06N 3/045

(54) **METHOD AND SYSTEM FOR PERFORMING INSTRUCTION TUNING BY USING HETEROGENEOUS LANGUAGES**

(30) Priority: 22.03.2024 KR 20240039844
(71) Applicant: LG Management Development Institute Co., Ltd., Seoul 07336 (KR)
(72) Inventor: LEE, Chang Ho, Seoul 07788 (KR); HAN, Jang Hoon, Seoul 07643 (KR); SHIN, Joong Bo, Seoul 07600 (KR); YANG, Nak Yeong, Seoul 08826 (KR)
(74) Representative: BCKIP Part mbB
(86) International application number: PCT/KR2025/003691
(87) International publication number: WO 2025/198373

(57) **Abstract**

A method and a system for performing instruction tuning of a language model by using heterogeneous languages according to an embodiment of the present invention can improve zero-shot performance and generalization performance of a language model by performing instruction tuning by using different heterogeneous languages.

## Description

### [Technical Field]

The present invention relates to a method and system for performing instruction tuning using heterogeneous languages. More specifically, the present invention relates to a method and system for performing instruction tuning using heterogeneous languages, which may improve instruction tuning performance for different heterogeneous languages.

### [Background Art]

With the recent emergence of pre-trained language models (large language pretraining models, LLMs) for large-scale general domain data, various tasks previously handled manually are being replaced by artificial intelligence-based ones.

As the development of super-large language models such as Chat GPT, Google's Gemini, Naver's HyperClova, Kakao Brain's KoGPT, and LG's EXAONE increases, various methods to increase zero-shot performance of super-large language models are being studied.

In particular, among the methods to increase the zero-shot performance of super-large language models, research on instruction tuning techniques is actively underway. Instruction tuning is a learning method first announced in Google's FLAN (Finetuned Language Models are Zero-Shot Learners) thesis, and refers to a technique that fine-tunes a large language model (LLM) using an instruction tuning dataset and thereby increases the zero-shot performance.

The instruction tuning is a technique in which a super-large language model understands tasks only with instructions without separating learning when given the instructions for a new task when multiple tasks are learned along with the instructions (descriptions about the tasks).

However, the instruction tuning requires a variety of pieces of task data and, along therewith, a variety of instructions to be constructed, so it is time and cost consuming in constructing resources.

### [Disclosure]

### [Technical Problem]

An embodiment of the present invention provides a method and system for performing instruction tuning using heterogeneous languages to reduce the cost and time required for constructing resources for the instruction tuning.

In addition, an embodiment of the present invention provides a method and system for performing instruction tuning using heterogeneous languages to increase zero-shot performance of a super-large language model by using the instruction tuning using the heterogeneous languages.

However, the technical tasks of an embodiment of the present invention are not limited to those as described above, and other technical tasks may exist.

### [Technical Solution]

A method for performing instruction tuning using heterogeneous languages according to an embodiment of the present invention pertains to a method for a computing system including a memory and a processor to perform instruction tuning of a large language model (LLM) using heterogeneous languages, wherein the method includes: setting a first instruction tuning dataset including one or more first tasks formed in a first language using metadata; setting a second instruction tuning dataset including one or more second tasks formed in a second language; generating a cross-language instruction; and performing instruction tuning on the first instruction tuning dataset and the second instruction tuning dataset using the cross-language instruction, wherein the generation of the cross-language instruction includes: generating one or more first instructions written in the first language; and generating one or more second instructions written in the second language, wherein the performance of the instruction tuning includes: performing instruction tuning on the second instruction tuning dataset using the first instruction; and performing instruction tuning on the first instruction tuning dataset using the second instruction, and wherein the first instruction and the second instruction are set to have the same format.

In another aspect, the setting of the first instruction tuning dataset includes generating N or more preset first tasks, where the N is a natural number greater than or equal to 1.

In another aspect, the generating the first instruction includes generating 3N first instructions and applying three instructions per task.

In another aspect, the setting the first instruction tuning dataset includes generating 34 NLU (natural language understanding) tasks and 17 NLG (natural language generation) tasks based on data collected from one or more of AIHub1, KorPora2, GIthub, Huggingface, KLUE3, Korquad4, ETRI5, Modu's Corpus, and KoBest.

In another aspect, the language model uses a heterogeneous language model.

A method for performing instruction tuning using heterogeneous languages according to an embodiment of the present invention includes: setting a first instruction tuning dataset including one or more first tasks formed in a first language using metadata; setting a second instruction tuning dataset including one or more second tasks formed in a second language; generating a cross-language instruction; and performing an inference on data input to the language model by applying the cross-language instruction to the first instruction tuning dataset and the second instruction tuning dataset, wherein the generating the cross-language instruction includes: generating one or more first instructions written in the first language; and generating one or more second instructions written in the second language, wherein the performing the inference includes applying the first instruction to the second instruction tuning dataset and applying the second instruction to the first instruction tuning dataset to perform an inference, and wherein the first instruction and the second instruction are set to have the same format.

A method for performing instruction tuning using heterogeneous languages according to an embodiment of the present invention includes: setting a first instruction tuning dataset including one or more first tasks formed in a first language using metadata; setting a second instruction tuning dataset including one or more second tasks formed in a second language; generating a cross-language instruction; performing instruction tuning on the first instruction tuning dataset and the second instruction tuning dataset using the cross-language instruction; and performing an inference on data input to the language model by applying the cross-language instruction to the first instruction tuning dataset and the second instruction tuning dataset, wherein the generating the cross-language instruction includes: generating one or more first instructions written in the first language; and generating one or more second instructions written in the second language, wherein the performing the instruction tuning includes performing instruction tuning on the second instruction tuning dataset using the first instruction and performing instruction tuning on the first instruction tuning dataset using the second instruction, wherein the performing the inference includes performing an inference by applying the first instruction to the second instruction tuning dataset and applying the second instruction to the first instruction tuning dataset, and wherein the first instruction and the second instruction are set to have the same format.

A system for performing instruction tuning using heterogeneous languages according to an embodiment of the present invention includes: at least one memory; and at least one processor for performing instruction tuning of a language model using the heterogeneous languages by reading out at least one application stored in the memory, wherein the processor include instructions for: setting a first instruction tuning dataset including one or more first tasks formed in a first language using metadata; setting a second instruction tuning dataset including one or more second tasks formed in a second language; generating a cross-language instruction including one or more first instructions written in the first language and one or more second instructions written in the second language; performing instruction tuning on the first instruction tuning dataset and the second instruction tuning dataset using the cross-language instruction; and performing an inference on data input to the language model by applying the cross-language instruction to the first instruction tuning dataset and the second instruction tuning dataset, wherein the processor is configured to: perform instruction tuning on the second instruction tuning dataset using the first instruction and perform instruction tuning on the first instruction tuning dataset using the second instruction; and perform an inference by applying the first instruction to the second instruction tuning dataset and applying the second instruction to the first instruction tuning dataset, and wherein the first instruction and the second instruction are set to have the same format.

A computing device according to an embodiment of the present invention includes: at least one memory; and at least one processor for performing instruction tuning of a language model using heterogeneous languages by reading out at least one application stored in the memory, wherein instructions of the processor include instructions for: setting a first instruction tuning dataset including one or more first tasks formed in a first language using metadata; setting a second instruction tuning dataset including one or more second tasks formed in a second language; generating a cross-language instruction; performing instruction tuning on the first instruction tuning dataset and the second instruction tuning dataset using the cross-language instruction; and performing an inference on data input to the language model by applying the cross-language instruction to the first instruction tuning dataset and the second instruction tuning dataset, wherein the generating the cross-language instruction includes: generating one or more first instructions written in the first language; and generating one or more second instructions written in the second language, wherein the performing the instruction tuning includes performing instruction tuning on the second instruction tuning dataset using the first instruction and performing instruction tuning on the first instruction tuning dataset using the second instruction, wherein the performing the inference includes performing an inference by applying the first instruction to the second instruction tuning dataset and applying the second instruction to the first instruction tuning dataset, and wherein the first instruction and the second instruction are set to have the same format.

### [Advantageous Effects]

A method and system for performing instruction tuning using heterogeneous languages according to an embodiment of the present invention can reduce the cost and time required for constructing resources for the instruction tuning.

In addition, a method and system for performing instruction tuning using heterogeneous languages according to an embodiment of the present invention can increase zero-shot performance of a super-large language model by using the instruction tuning using the heterogeneous languages.

However, the benefits of the present invention are not limited to those mentioned above, and other benefits not mentioned may be clearly understood from the following description.

### [Description of Drawings]

FIG. 1 illustrates an example block diagram of a computing system implementing instruction tuning of a language model using heterogeneous languages according to an embodiment of the present invention.
FIG. 2 illustrates an example block diagram of a computing device implementing instruction tuning of a language model using heterogeneous languages according to an embodiment of the present invention.
FIG. 3 illustrates an example block diagram of another aspect of a computing device implementing instruction tuning of a language model using heterogeneous languages according to an embodiment of the present invention.
FIG. 4 is an example block diagram illustrating an instruction tuning system of a language model using heterogeneous languages according to an embodiment of the present invention.
FIG. 5 is an example diagram illustrating a Korean instruction tuning dataset according to an embodiment of the present invention.
FIG. 6 is an example diagram illustrating tasks and instructions according to an embodiment of the present invention.
FIG. 7 is an example diagram illustrating an English instruction tuning dataset according to an embodiment of the present invention.
FIG. 8 is an example diagram illustrating a cross-language instruction according to an embodiment of the present invention.
FIG. 9 is an example diagram illustrating a language model that performs instruction tuning using heterogeneous languages according to an embodiment of the present invention.
FIG. 10 is a performance result table of a language model according to an embodiment of the present invention.
FIG. 11 is a performance graph of a language model according to an embodiment of the present invention.
FIGS. 12 to 14 are flowcharts for explaining an instruction tuning method of a language model using heterogeneous languages according to an embodiment of the present invention.

### [Best Mode for Invention]

Embodiments can impose various transformations that can have various embodiments, and specific embodiments illustrated in the drawings will be described in detail in the detailed description. The advantages, features and methods for achieving the same will become apparent from the following description of the embodiments given in conjunction with the accompanying drawings. However, the present invention is not limited to the embodiments described herein but may be embodied in many different forms. It will be understood that, although the terms "first" or "second" may be used herein to distinguish one component from another component, these components should not be limited by these terms. In addition, a singular expression includes a plural expression, unless the context clearly states otherwise. In addition, it should be understood that the terms such as "include" or "have" are merely intended to indicate that features, or components described in the specification are present, and are not intended to exclude the possibility that one or more other features, or components will be added. In addition, components in the drawings may be exaggerated or shrunk for the convenience of descriptions. For example, since the size and thickness of each element in the drawings has been arbitrarily modified for the convenience of descriptions, it should be noted that the present invention is not necessarily limited to what has been shown in the drawings.

Hereinafter, embodiments of the present invention will be described in detail with reference to appended drawings. Throughout the specification, the same or corresponding component is assigned the same reference numeral, and repeated descriptions thereof will be omitted.

Hereinafter, an exemplary system for implementing instruction tuning of a language model (large language pretraining model, LLM) using different heterogeneous languages is described in detail with reference to the attached drawings.

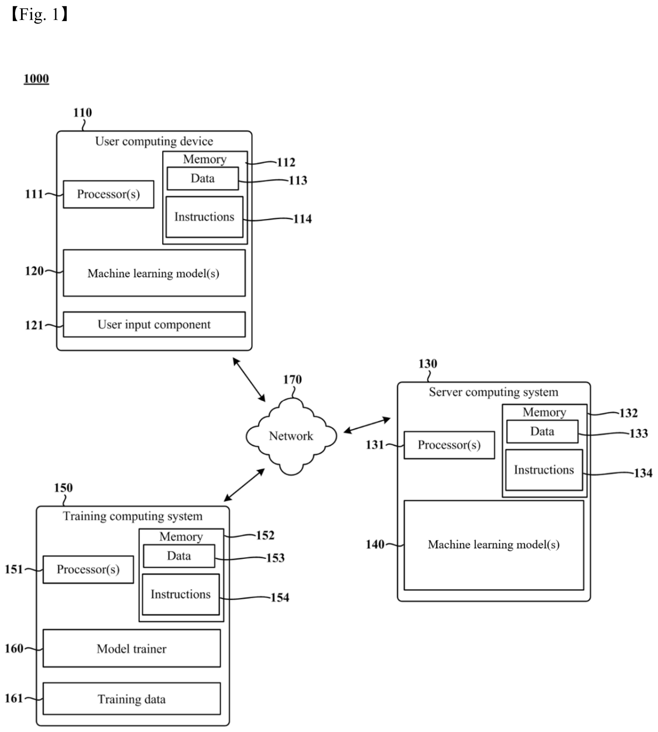

FIG. 1 illustrates an example block diagram of a computing system implementing instruction tuning of a language model using heterogeneous languages according to an embodiment of the present invention.

Referring to FIG. 1, a computing system 1000 which implements the instruction tuning of the language model using the heterogeneous languages according to an embodiment of the present invention includes a user computing device 110, a server computing system 130, and a training computing system 150, and any other devices which are configured to communicate through a network 170.

An instruction tuning method of the language model using the heterogeneous languages according to an embodiment of the present invention may be implemented and provided locally by the user computing device 110, implemented and provided in the form of a web service by the server computing system 130 which communicates with the user computing device 110, and implemented and provided by mutual association of the user computing device 110 and the server computing system 130.

In this connection, in an embodiment, the user computing device 110 and/or the server computing system 130 may train a language model 120 and/or 140 (machine learning model) through interaction with the training computing system 150 communicationally connected through the network 170. The training computing system 150 may be a system separated from the server computing system 130 or may be a portion of the server computing system 130.

In addition, in this connection, the artificial intelligence model (in an embodiment, the language model) may be directly trained locally by the user computing device 110, trained while the server computing system 130 and the user computing device 110 interact with each other through the network 170, and trained by using various training techniques and learning techniques by the separate training computing system 150. In addition, the method may also be implemented by a method in which the artificial intelligence model trained by the training computing system 150 is transmitted to the user computing device 110 and/or the server computing system 130 through the network 170, and is provided and updated.

In an embodiment, the training computing system 150 may be a portion of the server computing system 130 or a portion of the user computing device 110.

The user computing device 110 may include various types of computing devices such as a smart phone, a cellular phone, a digital broadcasting device, personal digital assistants (PDA), a portable multimedia player (PMP), a desktop, a wearable device, an embedded computing device, and/or a tablet PC.

The user computing device 110 includes at least one processor 111 and a memory 112. Herein, the processor 110 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

The memory 112 may include one or more non-transitory/transitory computer-readable storage media, such as RAM, ROM, EEPROM, EPROM, flash memory devices, or magnetic disks, and combinations thereof, and may include web storage of servers performing storage functions of the memory on the Internet. The memory 112 may store data 113 and instructions 114 necessary for the at least one processor 111 to perform a functional operation, such as training the artificial intelligence model or executing outlier detection through the artificial intelligence model.

In an embodiment, the user computing device 110 may store at least one machine learning model 120.

The machine learning model 120 may be various machine learning models such as a plurality of neural networks (for example, deep neural networks) or other types of machine learning models, including non-linear models and/or linear models, and may be configured of a combination thereof.

In this connection, the neural network may include at least one of feed-forward neural networks, recurrent neural networks (for example, long short-term memory recurrent neural networks), convolutional neural networks and/or other forms of neural networks.

In an embodiment, the user computing device 110 may receive at least one machine learning model 120 from the server computing system 130 via the network 170, store the same in the memory 112, and then execute the stored machine learning model 120 by the processor 111 to perform the outlier detection.

In an embodiment, the server computing system 130 may include at least one machine learning model 140 and perform operations through the machine learning model 140, and may provide a language model that has performed instruction tuning using heterogeneous languages to a user by linking with the user computing device 110 in a manner of communicating data related thereto with the user computing device 110.

For example, the user computing device 110 may provide the language model that has performed the instruction tuning by providing an output for the input of a user using the machine learning model 140 through the server computing system 130 via the web.

In addition, the artificial intelligence model may also be implemented in such a way that at least some of the machine learning models 120 and/or 140 are executed on the user computing device 110 and the rest are executed on the server computing system 130.

In addition, the user computing device 110 may include at least one input component 121 that detects user input. For example, the user input component 121 may include a touch sensor (for example, a touch screen and/or a touch pad) that detects touch of an input medium of a user (for example, a finger or a stylus), an image sensor that detects a motion input of a user, a microphone, a button, a mouse and/or a keyboard that detects user voice input. In addition, the user input component 121 may include an interface and an external controller when receiving input from an external controller (for example, a mouse or a keyboard) through the interface.

The server computing system 130 includes at least one processor 131 and a memory 132. Herein, the processor 131 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

The memory 132 may include one or more non-transitory/transitory computer-readable storage media, such as RAM, ROM, EEPROM, EPROM, flash memory devices, or magnetic disks, and combinations thereof. The memory 132 may store data 133 and instructions 134 required for the processors 131 to perform a functional operation such as the train of the artificial intelligence model or the execution of the outlier detection through the artificial intelligence model.

In an embodiment, the server computing system 130 may be implemented to include one or more computing devices or computers. For example, the server computing system 130 may be implemented so that a plurality of computing devices operate according to sequential computing architecture, parallel computing architecture, or a combination thereof. Further, the server computing system 130 may include a plurality of computing devices connected through the network 170.

Further, the server computing device 130 may store one or more machine learning models 140. For example, the server computing system 130 may include a neural network and/or multilayer non-linear model as the machine learning model 140. An exemplary neural network may include a feed-forward neural network, a deep neural network, a recurrent neural network, and a convolution neural network.

The training computing system 150 includes at least one processor 151 and a memory 152. Herein, the processor 151 may be configured of at least one or a plurality of processors electrically connected among the CPU, the GPU, the ASICs, the DSPs, the DSPDs, the PLDs, the FPGAs, controllers, micro-controllers, microprocessors, and/or other electrical units for performing functions.

In addition, the memory 152 may include one or more non-transitory/transitory computer-readable storage media, such as RAM, ROM, EEPROM, EPROM, flash memory devices, or magnetic disks, and combinations thereof, and may include web storage of servers performing storage functions of the memory on the Internet. The memory 152 may store data 153 and instructions 154 necessary for the processor 151 to perform training of the artificial intelligence model.

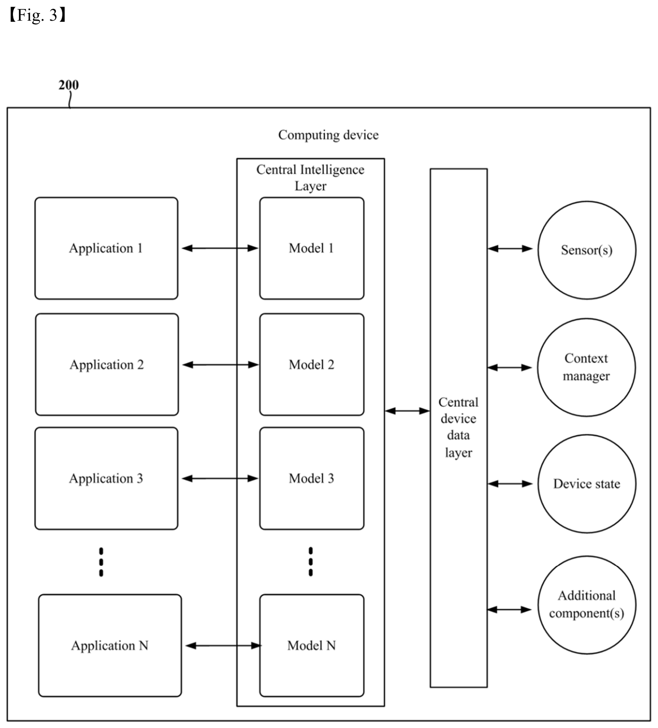

For example, the training computing system 150 may include a model trainer 160 configured to train the machine learning models 120 and/or 140 stored in the user computing device 110 and/or the server computing system 130 by using various training or learning techniques such as backpropagation of an error (according to the framework illustrated in FIG. 3).

For example, the model trainer 160 may perform updating one or more parameters of the machine learning models 120 and/or 140 based on a defined loss function by a backpropagation scheme.

In some implementation examples, the performance of the backpropagation of the error may include performing truncated backpropagation through time. The model trainer 160 may perform multiple generalization techniques (for example, weight reduction, drop-out, and/or knowledge distillation) in order to enhance a generalization capability of the trained machine learning models 120 and/or 140.

In particular, the model trainer 160 may train the machine learning models 120 and/or 140 based on a series of training data 161. Herein, the training data 161 may include, for example, different formats of data such as an image, an audio, and/or text. Examples of image type data which may be used may include a video frame, LiDAR point cloud, an X-ray image, a computer tomography scan, a hyperspectral image, and/or various other types of images.

The training data 161 may be provided by the user computing device 110 and/or the server computing system 130. When the training computing device 150 trains the machine learning models 120 and/or 140 with respect to specific data of the user computing device 110, the machine learning models 120 and/or 140 may be characterized as a personalized model.

In addition, the model trainer 160 includes a computer logic utilized to provide a desired function.

Further, the model trainer 160 may be implemented as hardware, firmware, and/or software controlling a universal processor. In one implementation example, the model trainer 160 may include a program file stored in a storage device, and may be loaded to the memory 152 and executed by one or more processors 151. In another implementation example, the model trainer 160 includes one or more sets of computer-executable data 153 and instructions 154 stored in executable by a tangible computer-readable storage medium such as a RAM hard disk or an optical or magnetic medium.

The network 170 includes a 3rd Generation Partnership Project (3GPP) network, a Long Term Evolution (LTE) network, a World Interoperability for Microwave Access (WIMAX) network, Internet, a Local Area Network (LAN), Wireless Local Area Network (LAN), a Wide Area Network (WAN), a Personal Area Network (PAN), a Bluetooth network, a satellite broadcasting network, an analog broadcasting network, and/or a Digital Multimedia Broadcasting (DMB) network, but is not limited thereto.

In general, communication through the network 170 may be performed through various communication protocols (for example, TCP/IP, HTTP, SMTP, and/or FTP), encoding or formats (for example, HTML and/or XML), and/or protective schemas (for example, VPN, secure HTTP, and/or SSL) by using any type of wired and/or wireless communication.

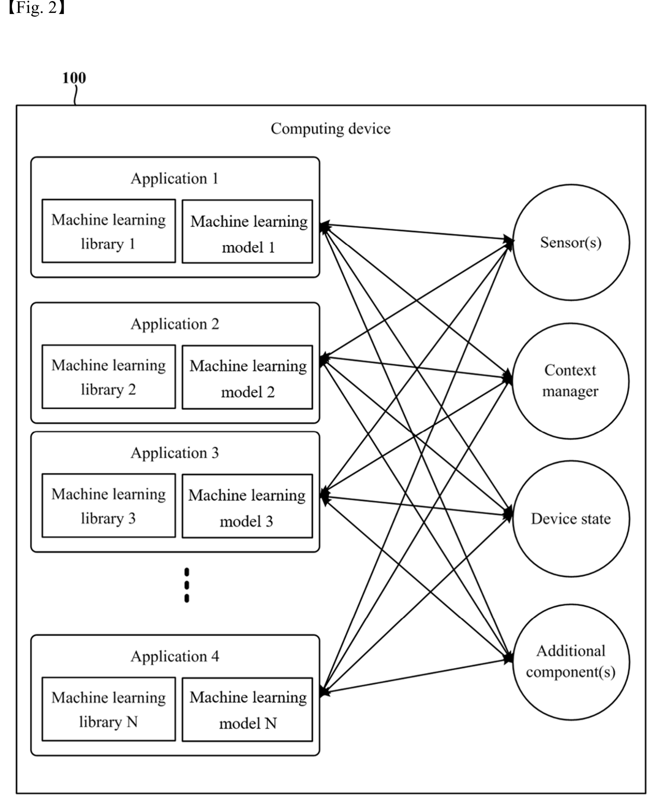

FIG. 2 illustrates an example block diagram of a computing device implementing instruction tuning of a language model using heterogeneous languages according to an embodiment of the present invention.

Referring to FIG. 2, the computing device 100 included in the user computing device 110, the server computing system 130, and the training computing system 150 includes a plurality of applications (for example, application 1 to application N). Each application may include a machine learning library and at least one machine learning model. For example, the applications may include a language processing application, a text messaging application, an e-mail application, a dictation application, a virtual keyboard application, a browser application, and a chat-bot application.

In an embodiment, the computing device 100 may include the model trainer 160 for training the artificial intelligence model, and may store and operate the trained artificial intelligence model to provide output data according to predetermined input data (in an embodiment, image data).

Each application of the computing device 100 may communicate with a number of other components of the computing device, such as, for example, one or more sensors, a context manager, a device state component, and/or additional components. Each application may communicate with each device component using an API (for example, a public API). In addition, the API used by each application may be specific to the relevant application.

FIG. 3 illustrates an example block diagram of another aspect of the computing device 1000 implementing instruction tuning of a language model using heterogeneous languages according to an embodiment of the present invention.

Referring to FIG. 3, a computing device 300 includes a plurality of applications (for example, application 1 to application N). Each application is in communication with a central intelligence layer. For example, the applications may include a language processing application, a text messaging application, an e-mail application, a dictation application, a virtual keyboard application, and a browser application. Each application may communicate with the central intelligence layer (and model(s) stored therein) using an API (for example, a common API across all applications).

In addition, the central intelligence layer may include a plurality of machine learning models. For example, as illustrated in FIG. 3, a respective machine learning model and at least some thereof may be provided for each application and managed by the central intelligence layer. In other implementations, two or more applications may share a single machine leaning model. For example, in some implementations, the central intelligence layer may provide a single model for all of the applications. In some implementations, the central intelligence layer may be included within an operating system of the computing device 300 or implemented differently.

The central intelligence layer may communicate with a central device data layer. The central device data layer may be a centralized data storage for the computing device 300. As illustrated in FIG. 3, the central device data layer may communicate with a number of other components of the computing device 300, such as, for example, one or more sensors, a context manager, a device state component, and/or additional components. In some implementations, the central device data layer may communicate with each device component using an API (for example, a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein may be implemented using a single device or component or a plurality of devices or components working in combination. Databases and applications may be implemented on a single system or distributed across a plurality of systems. Distributed components may operate sequentially or in parallel.

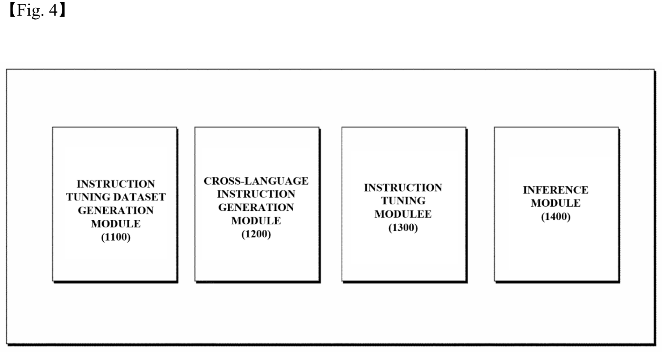

Hereinafter, with reference to FIG. 4, an instruction tuning system of a language model using heterogeneous languages according to an embodiment of the present invention will be described.

FIG. 4 is an example block diagram illustrating an instruction tuning system of a language model using heterogeneous languages according to an embodiment of the present invention.

An instruction tuning system 1000 using the heterogeneous languages according to an embodiment of the present invention may refer to a language model (LLM) that performs instruction tuning using two different languages.

The instruction tuning system 1000 using the heterogeneous languages includes a memory and a processor, at least one application is stored in the memory, and the processor reads the application stored in the memory and performs instruction tuning of a learning model using heterogeneous languages.

The function for performing the instruction tuning using the heterogeneous languages may be illustrated using a block diagram as illustrated in FIG. 4. Referring to FIG. 4, the processor may perform the functions of an instruction tuning dataset generation module 1100, a cross-language instruction generation module 1200, an instruction tuning module 1300, and an inference module 1400 described below.

The instruction tuning dataset generation module 1100 generates an instruction tuning dataset using data written in each language to perform instruction tuning for different languages. In this connection, the instruction tuning dataset generation module 1100 may differently generate a first instruction tuning dataset for a first language and a second instruction tuning dataset for a second language.

The instruction tuning dataset generation module 1100 generates and secures various tasks using metadata and open sources to generate the first instruction tuning dataset. In addition, the instruction tuning dataset generation module 1100 sets M preset instructions (template) for each task (M is a natural number greater than or equal to 1).

In this connection, M may be set to have a value of 10, but an embodiment of the present invention is not limited thereto.

Specifically, the instruction tuning dataset generation module 1100 may generate and classify datasets including various open sources such as AIHub1, Korpora2, Github, Huggingface, KLUE3, Korquad4, and ETRI5 and language understanding and language generation tasks. In addition, the instruction tuning dataset generation module 1100 may configure clusters of the dataset using heuristic rules.

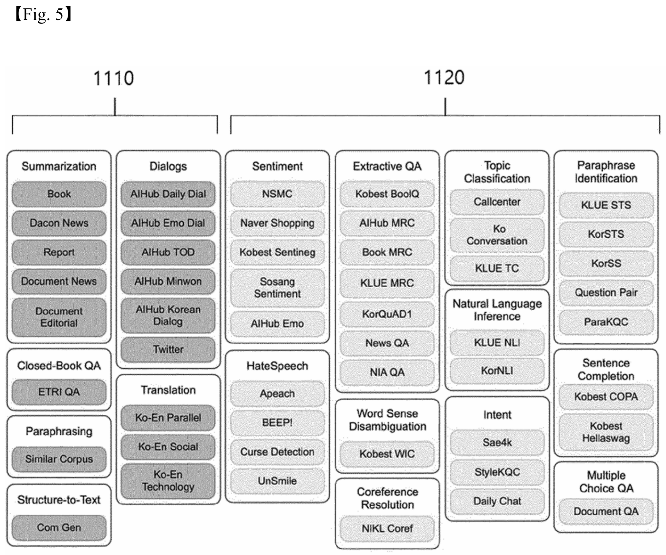

For example, the instruction tuning dataset generation module 1100 may generate the first instruction tuning dataset such that the first instruction tuning dataset is classified into a total of 17 task clusters, including 17 natural language generation (NLG) datasets 1110 and 34 natural language understanding (NLU) datasets 1120, as illustrated in FIG. 5.

In other words, Summarizaiton, Closed-Book QA, Paraphasing, Structure-to-Text, Dialogs, Translation, Sentiment, HateSpeech, Extractive QA, Word Sense Disambiguation, Coreference Resolutino, Topic Classification, Natural Language Inference, Intent, Paraphase Identification, Sentence Completion, and Multiple Choice QA illustrated in FIG. 5 represent 17 task cluster classifications.

In addition, Book, Dacon News, Report, Document News, Document Editorial, ETRI QA, Similar Corpus, Com Gen, AIHub Daily Dial, AIHub Emo Dial, AIHub TOD, AIHub Minwon, AIHub Korean Dialog, Twitter, Ko-En Parallel, Ko-En Social, and Ko-En Technology represent 17 NLG datasets, and NSMC, Naver Shopping, Kobest Sentineg, Sosang Sentiment, AIHub Emo, Apeach, BEEP!, Curse Detection, UnSmile, Kobest BooIQ, AIHub MRC, Book MRC, KLUE MRC, KorQuAD1, News QA, NIA QA, Kobeast WIC, NIKL Coref, Callcenter, Ko Conversation, KLUE TC, KLUE NLI, KorNLI, Sae4k, StyleKQC, Daily Chat, KLUE STS, KorSTS, KorSS, Question Pair, ParaKQC, Kobest COPA, Kobest Hellaswag, and Document QA refer to 34 NLU datasets.

As such, the instruction tuning dataset generation module 1100 generates various NLP (natural language processing) tasks to generate the first instruction tuning dataset, and sets M instructions for each task.

In this connection, the instruction tuning dataset generation module 1100 generates an instruction by using all or a portion of the data label included in the first instruction tuning dataset or by adding a new data label to generate the instruction for the first instruction tuning dataset.

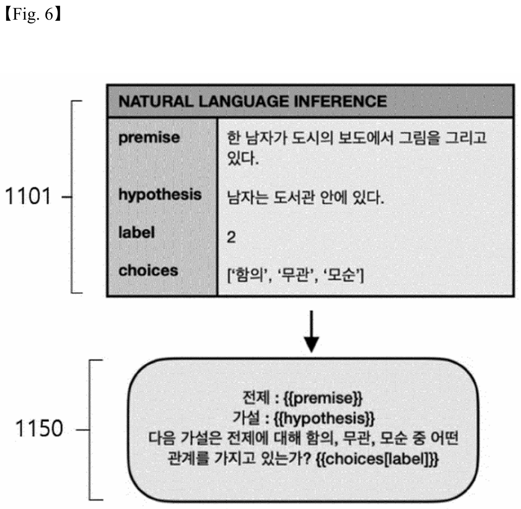

Specifically, as illustrated in FIG. 6, a task 1101 included in the first instruction tuning dataset includes a plurality of data labels and values corresponding to the data labels. The instruction tuning dataset generation module 1100 generates an instruction 1150 for the task 1101 by using all or a portion of the data labels included in the task 1101 or by adding new data labels. In this connection, the instruction 1150 generated for the task 1101 may be generated in a plural number, and 10 or more instructions 1150 may be generated and set for each task 1101.

In addition, the instruction tuning dataset generation module 1100 may generate the second instruction tuning dataset written in the second language. The instruction tuning dataset generation module 1100 may generate the second instruction tuning dataset using P3 data of T0.

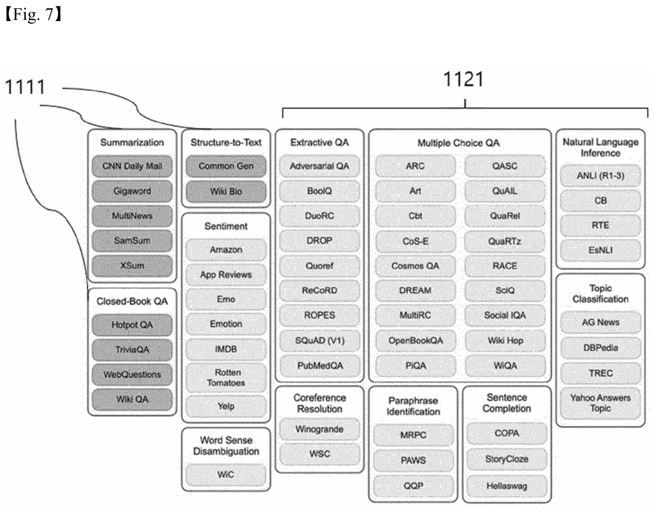

As an example, as illustrated in FIG. 7, the second instruction tuning dataset may be generated to be classified into a total of 12 task clusters, including 11 NLG datasets 1111 and 51 NLU datasets 1121.

In other words, summarization, Closed-Book QA, Structure-to-Text, Sentiment, Word Sense Disambiguation, Extractive QA, Coreference Resolution, Multiple Choice QA, Paraphrase Identification, Sentence Completion, Natural Language Inference, and Topic Classification illustrated in FIG. 7 correspond to 12 task clusters.

In addition, CNN Daily Mail, Gigaword, MutiNews, SamSum, XSum, Hotpot QA, TriviaQA, WebQuestions, Wiki QA, Common Gen, and Wiki Bio refer to 11 NLG datasets 1111, and Amazon, App Reviews, Emo, Emotion, IMDB, Rotten Tomatoes, Yelp, WIC, Adversarial QA, BooIQ, DuoRC, DROP, Quoref, ReCoRD, ROPES, SQuAD(V1), PubMedQA, Winogrande, WSC, ARC, Art, Cbt, CoS-E, Cosmos QA, DREAM, MultiRC, OpenBookQA PiQA, QASC, QuAIL, QuaRel, QuaRTz, RACE, SciQ, Social IQA, Wiki Hop, WiQA, MRPC, PAWS, QQP, COPA, StoryCloze, Hellaswag, ANLI(R1-3), CB, RTE, EsNLI, AG News, DBPedia, TREC, and Yahho Answers Topic refer to 51 NLU datasets 1121.

In addition, the instruction tuning dataset generation module 1100 may generate an instruction by using all or a portion of the data label included in the second instruction tuning dataset or by adding a new data label to generate the instruction for the second instruction tuning dataset.

The cross-language instruction generation module 1200 generates a cross-language instruction for performing instruction tuning of a language model using heterogeneous languages (first language and second language).

The cross-language instruction generation module 1200 may increase the effects of instruction tuning using two languages by generating and setting N cross-language instructions (N is a natural number greater than or equal to 1) per task included in the first instruction tuning dataset and the second instruction tuning dataset.

In this connection, N may be set to have a value of 3, but an embodiment of the present invention is not limited thereto.

Specifically, the cross-language instruction generation module 1200 generates the first instruction written in the first language and the second instruction written in the second language, respectively. In this connection, the first and second instructions are set to have the same format (data label). In addition, the first instruction is applied to the second instruction tuning dataset, and the second instruction is applied to the first instruction tuning dataset.

In other words, the dataset and instructions are set so that the language of the instruction tuning dataset and the language of the instructions intersect with each other.

The cross-language instruction generation module 1200 may generate the first instruction by machine-translating instructions for the second instruction tuning dataset into the first language, and may generate the second instruction by machine-translating instructions for the first instruction tuning dataset into the second language.

In addition, the cross-language instruction generation module 1200 may generate the cross-language instruction by preferentially selecting commonly included data labels among the basic instructions for the first instruction tuning dataset and the data labels included in the second instruction tuning dataset.

In addition, the cross-language instruction generation module 1200 may generate the cross-language instruction by setting weights for each data label based on the frequency of use among the basic instructions for the first instruction tuning dataset and the data labels included in the second instruction tuning dataset, and adding data labels with weights greater than a reference value.

In addition, the cross-language instruction generation module 1200 adds, deletes, and modifies the data label of the first instruction and the label of the second instruction to change the format of the first instruction and the format of the second instruction to be identical.

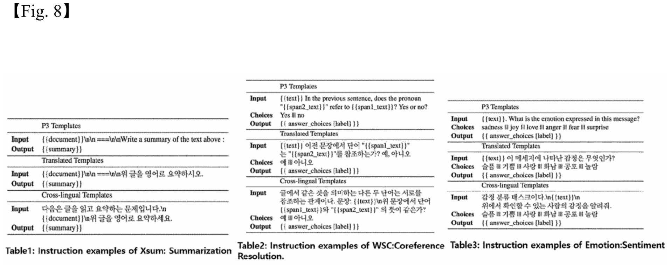

Hereinafter, FIG. 8 is an example of a cross-language instruction.

Table 1 in FIG. 8 shows examples of cross-language instructions for Xsum: Summarization, Table 2 shows examples of cross-language instructions for WSC: Coreference Resolution, and Table 3 shows examples of cross-language instructions for Emotion: Sentiment.

The P3 Template in Tables 1 to 3 refers to instructions of the second instruction tuning dataset, the Translated Template refers to instructions simply translated into the first language, and the Cross-Lingual Templates refer to cross-language instructions in which the order or position of data labels or the presence or absence of expressions are modified.

The instruction tuning module 1300 performs instruction tuning on the first instruction tuning dataset and the second instruction tuning dataset using the cross-language instruction generated by the cross-language instruction generation module 1200.

In other words, the LLM may perform learning using the cross-language instruction, the first instruction tuning dataset, and the second instruction tuning dataset.

In addition, the inference module 1400 may be used to perform an inference using the cross-language instruction in an inference stage, separately from or in addition to a learning stage.

In other words, the language model may perform learning using the first instruction tuning dataset and the second instruction tuning dataset, or perform an inference on newly input data using the cross-language instruction, the first instruction tuning dataset, and the second instruction tuning dataset, or perform learning and inference on new data using the cross-language instruction, the first instruction tuning dataset, and the second instruction tuning dataset.

In this connection, a heterogeneous language model may be used as the language model for using the first and second languages.

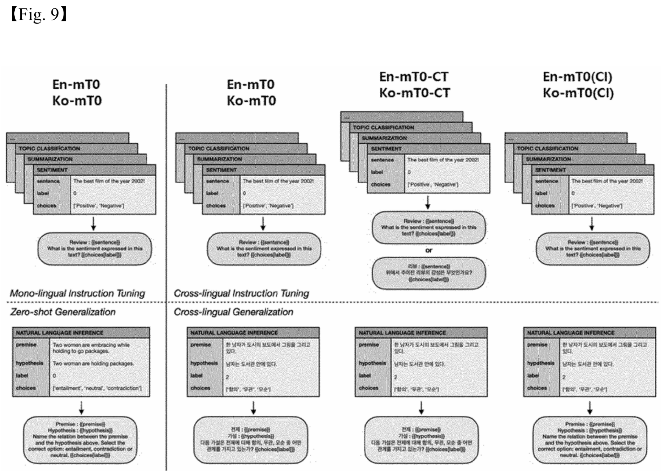

Hereinafter, with reference to FIG. 9, the language model using cross-language instruction in learning and inference stages and the performance of each model are described.

FIG. 9 shows an example of a language model that performs learning and inference on the cross-language instruction.

In FIG. 9, training and evaluation are distinguished by a dotted line, with the upper portion of the dotted line indicating training and the lower portion of the dotted line indicating evaluation. In addition, in FIG. 9, the solid line distinguishes between a single language and a heterogenous language, with the left side of the solid line indicating a single language case and the right side of the solid line indicating a heterogenous language case.

In addition, in FIG. 9, En-mT0 refers to a language model trained using the second instruction tuning dataset described above. En-mT0-CT refers to a language model that performs training on the second instruction tuning dataset using the cross-language instruction described above only during training and performs inference with the original instructions. En-mT0(CI) refers to a model that trains on the second instruction tuning dataset using original instruction and performs inference using the cross-language instruction.

In addition, Ko-mT0 refers to a language model trained using the first instruction tuning dataset described above. Ko-mT0-CT refers to a language model that performs training on the first instruction tuning dataset using the cross-language instruction described above only during training and performs inference with the original instructions. Ko-mT0(CI) refers to a model that performs training on the first instruction tuning dataset using the original instructions and performs inference using the cross-language instruction.

In this connection, the examples described above and below are explained assuming that the first language is Korean and the second language is English, but the embodiments of the present invention are not limited thereto.

To evaluate the zero-shot performance of each model for the task, evaluations where performed using two separate holdout setups. The first group includes four tasks: natural language inference, sentence completion, coreference resolution, and word sense disambiguation. The second group is configured of three tasks: sentiment analysis, summarization, and multiple-choice QA.

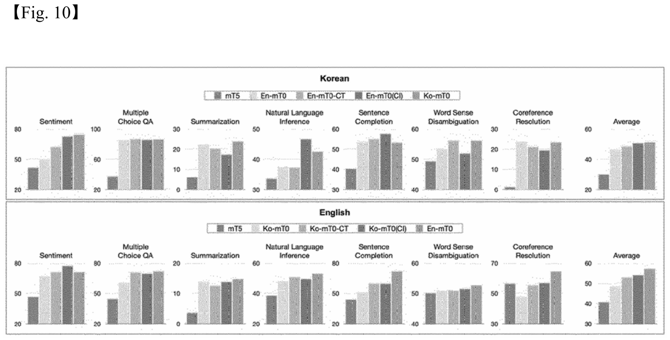

FIG. 10 shows the zero-shot performance and language generalization performance scores of each model.

As illustrated in FIG. 10, performance improvements occurred even when instruction tuning was applied in two different languages. Specifically, tasks such as multiple-choice QA, summarization, and sentence completion in Korean evaluation show similar performance between an En-mT0 model and a Ko-mT0 model. In addition, for English evaluation, Ko-mT0 shows similar performance to En-mT0 in sentiment analysis and summarization tasks.

In addition, CT and CI models using the cross-language instruction were found to have improved performance in most indicators compared to models using the original instructions. Specifically, in the evaluation of Korean, En-mT0-CT and En-mT0(CI) were found to show significant performance improvements compared to En-mT0. Similarly, in English evaluation, Ko-mT0-CT and Ko-mT0(CI) were found to have improved performance compared to Ko-mT0. Accordingly, it is identified that when a language model is trained and inferred by applying the cross-language instruction, the performance is improved compared to instruction tuning using a single language.

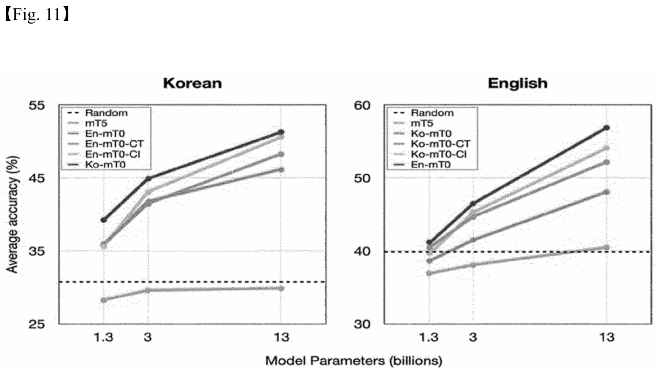

In addition, FIG. 11 is a graph illustrating the average task performance for both Korean and English. As illustrated in FIG. 11, the performance of all instruction tuning models improves as the model size increases. In addition, it is identified that the models using the cross-language instruction (En-mT0-CT, En-mT0-CI, Ko-mT0-CT, and Ko-mT0-CI) across various model sizes show a greater degree of performance improvement than the general models (En-mT0 and Ko-mT0).

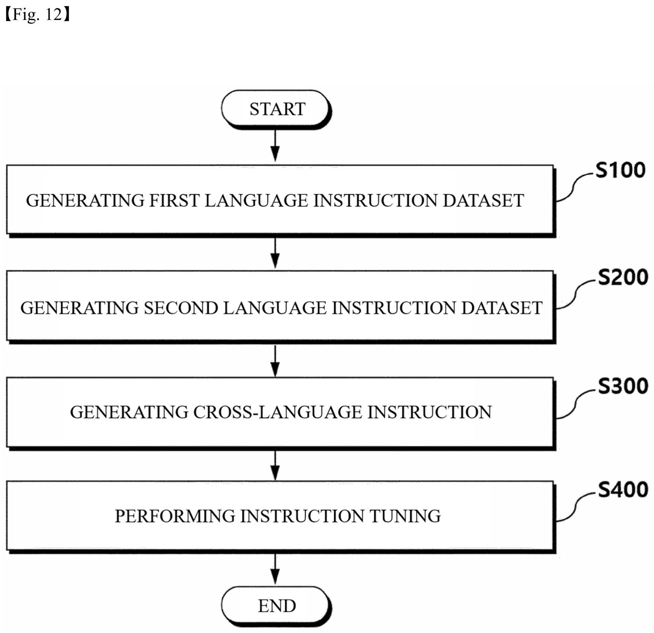

Hereinafter, a method for performing instruction tuning of a language model using heterogeneous languages according to an embodiment of the present invention will be described in detail with reference to FIGS. 12 to 14.

FIGS. 12 to 14 are flowcharts of a method for performing instruction tuning of a language model using heterogeneous languages according to an embodiment of the present invention.

Referring to FIG. 12, a method for performing instruction tuning of a language model using heterogeneous languages according to an embodiment of the present invention may include: generating a first language instruction dataset (S100); generating a second language instruction dataset (S200); generating a cross-language instruction (S300); and performing instruction tuning (S400).

In the generation of the first language instruction dataset (S100), the instruction tuning system of the language model using the heterogeneous languages may generate and classify datasets including various open sources such as AIHub1, Korpora2, Github, Huggingface, KLUE3, Korquad4, and ETRI5, as well as language understanding and language generation tasks.

In addition, in the generation of the first language instruction dataset (S100), the instruction tuning system for the language model using the heterogeneous languages may configure clusters of the dataset using heuristic rules.

Specifically, in the generation of the first language instruction dataset (S100), the instruction tuning system of the language model using the heterogeneous languages may generate the first instruction tuning dataset so that the first instruction tuning dataset is classified into a total of 17 task clusters, including 17 NLG datasets 1110 and 34 NLU datasets 1120, as illustrated in FIG. 5.

In addition, in the generation of the first language instruction dataset (S100), the instruction tuning system of the language model using the heterogeneous languages may set a basic instruction for the first instruction tuning dataset. In this connection, the basic instruction is set using the same first language as the first instruction tuning dataset.

In addition, the basic instruction for the first instruction tuning dataset is generated by the instruction tuning system of the language model using the heterogeneous languages by using all or a portion of the data labels included in the first instruction tuning dataset or by adding new data labels.

In the generation of the second language instruction dataset (S200), the instruction tuning system of the language model using the heterogeneous languages may generate and set the second instruction tuning dataset and the basic instruction using P3 data.

In the generation of the cross-language instruction (S300), the instruction tuning system of the language model using the heterogeneous languages generates and sets N cross-language instructions (N is a natural number greater than or equal to 1) per task included in the first instruction tuning dataset and the second instruction tuning dataset, thereby increasing the effect of instruction tuning using two languages.

In this connection, N may be set to have a value of 3, but an embodiment of the present invention is not limited thereto.

Specifically, in the generation of the cross-language instruction (S300), the instruction tuning system of the language model using the heterogeneous languages generates the first instruction written in the first language and the second instruction written in the second language, respectively. In this connection, the first and second instructions are set to have the same format (data label). In addition, the first instruction is applied to the second instruction tuning dataset, and the second instruction is applied to the first instruction tuning dataset.

In other words, the dataset and instruction are set so that the language of the instruction tuning dataset and the language of the instruction intersect with each other.

The instruction tuning system of the language model using the heterogeneous languages may generate the first instruction by machine translating instructions for the second instruction tuning dataset into the first language, and may generate the second instruction by machine translating instructions for the first instruction tuning dataset into the second language.

In addition, the instruction tuning system of the language model using the heterogeneous languages may generate the cross-language instruction by preferentially selecting data labels commonly included among the basic instructions for the first instruction tuning dataset and the data labels included in the second instruction tuning dataset.

In addition, the instruction tuning system of the language model using the heterogeneous languages may generate the cross-language instruction by setting weights for each data label based on the frequency of use among the basic instructions for the first instruction tuning dataset and the data labels included in the second instruction tuning dataset, and adding data labels with weights greater than a reference value.

In addition, in the generation of the cross-language instruction (S300), the instruction tuning system of the language model using the heterogeneous languages adds, deletes, and modifies the data label of the first instruction and the label of the second instruction to change the format of the first instruction and the format of the second instruction to be identical.

In the performance of the instruction tuning (S400), the instruction tuning system of the language model using the heterogeneous languages performs learning (tuning) of a language model (LLM, mT0) by applying the cross-language instruction to the first instruction tuning dataset and/or the second instruction tuning dataset.

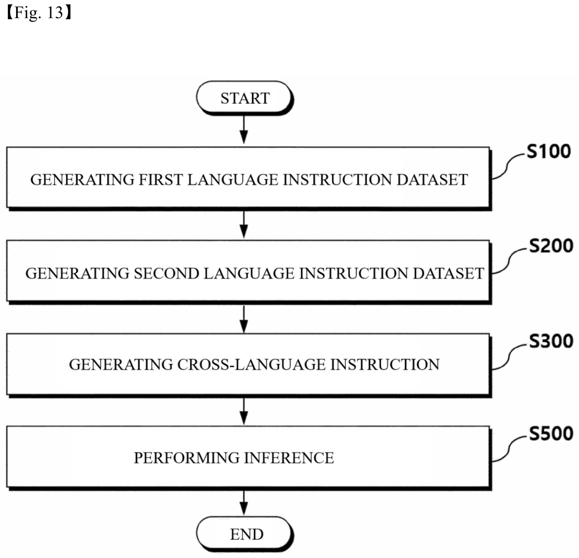

In addition, referring to FIG. 13, a method for performing instruction tuning of a language model using heterogeneous languages according to an embodiment of the present invention may include: generating the first language instruction dataset (S 100); generating the second language instruction dataset (S200); generating the cross-language instruction (S300); and performing an inference (S500).

In the performance of the inference (S500), the basic instructions of the first instruction tuning dataset and the second instruction tuning dataset are applied to train (tune) the language model, and then in the performance of the inference of the learning model for the input data, the cross-language instruction is applied to the first instruction tuning dataset and/or the second instruction tuning dataset to perform the inference.

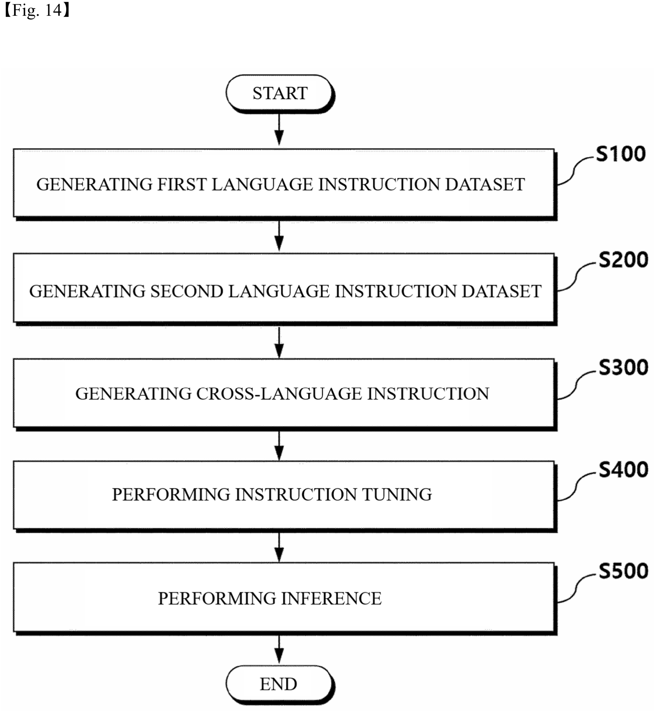

In addition, referring to FIG. 14, a method for performing instruction tuning of a language model using heterogeneous languages according to an embodiment of the present invention may include: generating the first language instruction dataset (S100); generating the second language instruction dataset (S200); generating the cross-language instruction (S300); performing the instruction tuning (S400); and performing the inference (S500).

In both the performing the instruction tuning (learning) S400 and the performing the inference S500 of the method for performing the instruction tuning of the language model using the heterogeneous languages according to FIG. 14, the cross-language instruction is applied to the first instruction tuning dataset and/or the second instruction tuning dataset.

Accordingly, not only is learning (tuning) of a language model performed by applying the cross-language instruction to the first instruction tuning dataset and/or the second instruction tuning dataset, but inference is also performed by applying the cross-language instruction to the first instruction tuning dataset and/or the second instruction tuning dataset.

The embodiments of the present invention described above may be implemented in the form of program commands which may be executed through various types of computer constituting elements and recorded in a computer-readable recording medium. The computer-readable recording medium may include program commands, data files, and data structures separately or in combination thereof. The program commands recorded in the computer-readable recording medium may be those designed and configured specifically for various embodiments of the present invention or may be those commonly available for those skilled in the field of computer software. Examples of a computer-readable recoding medium may include magnetic media such as hard-disks, floppy disks, and magnetic tapes; optical media such as CD-ROMs and DVDs; and hardware devices specially designed to store and execute program commands such as ROM, RAM, and flash memory. Examples of program commands include not only machine codes such as those generated by a compiler but also high-level language codes which may be executed by a computer through an interpreter and the like. The hardware device may be replaced with by one or more software modules to perform the operations of various embodiments of the present invention, and vice versa.

Specific executions described in the present invention are exemplary embodiments and the scope of various embodiments of the present invention is not limited even by any method. For brevity of the specification, descriptions of conventional electronic configurations, control systems, software, and other functional aspects of the systems may be omitted. Further, connection or connection members of lines among components exemplarily represent functions connections and/or physical or circuitry connections and may be represented as various functional connections, physical connections, or circuitry connections which are replaceable or added in an actual device. Further, unless otherwise specified, such as "essential" or "important," the connections may not be components particularly required for application of various embodiments of the present invention.

Further, in the detailed description of the present invention, which is described, while the present invention has been described with respect to the preferred embodiments, it will be understood by those skilled in the art or those skilled in the art having ordinary knowledge in the technical field that various changes and modifications of various embodiments of the present invention may be made without departing from the spirit and the technical scope of the present invention described in the following claims. Accordingly, the technical scope of various embodiments of the present invention should not be limited to the contents described in the detailed description of the present invention but should be defined by the claims.

### [Mode for Invention]

The mode for invention is the same as the best mode for invention described above.

### [Industrial Applicability]

An embodiment of the present invention relates to a method and system for performing instruction tuning using heterogeneous languages, and is able to be used in the artificial intelligence industry, and thus has industrial applicability.

## Claims

1. A method for a computing system comprising a memory and a processor to perform instruction tuning of a large language model (LLM) using heterogeneous languages, the method comprising:
setting a first instruction tuning dataset comprising one or more first tasks formed in a first language using metadata;
setting a second instruction tuning dataset comprising one or more second tasks formed in a second language;
generating a cross-language instruction; and
performing instruction tuning on the first instruction tuning dataset and the second instruction tuning dataset using the cross-language instruction,
wherein the generating the cross-language instruction comprises:
generating one or more first instructions written in the first language; and
generating one or more second instructions written in the second language,
wherein the performing the instruction tuning comprises:
performing instruction tuning on the second instruction tuning dataset using the first instruction; and
performing instruction tuning on the first instruction tuning dataset using the second instruction, and
wherein the first instruction and the second instruction are set to have the same format.

2. The method of claim 1, wherein the setting the first instruction tuning dataset comprises generating N or more preset first tasks, where the N is a natural number greater than or equal to 1.

3. The method of claim 2, wherein the generating first instruction comprises generating 3N first instructions and applying three instructions per task.

4. The method of claim 3, wherein the setting the first instruction tuning dataset comprises generating 34 natural language understanding (NLU) tasks and 17 natural language generation (NLG) tasks based on data collected from one or more of AIHub1, KorPora2, GIthub, Huggingface, KLUE3, Korquad4, ETRI5, Modu's Corpus, and KoBest.

5. The method of claim 4, wherein the language model uses a multi-lingual model.

6. A method for a computing system comprising a memory and a processor to perform instruction tuning of a large language model (LLM) using heterogeneous languages, the method comprising:
setting a first instruction tuning dataset comprising one or more first tasks formed in a first language using metadata;
setting a second instruction tuning dataset comprising one or more second tasks formed in a second language;
generating a cross-language instruction; and
performing an inference on data input to the language model by applying the cross-language instruction to the first instruction tuning dataset and the second instruction tuning dataset, wherein the generating the cross-language instruction comprises:
generating one or more first instructions written in the first language; and
generating one or more second instructions written in the second language,
wherein the performing the inference comprises applying the first instruction to the second instruction tuning dataset and applying the second instruction to the first instruction tuning dataset to perform an inference, and
wherein the first instruction and the second instruction are set to have the same format.

7. The method of claim 6, wherein the setting the first instruction tuning dataset comprises generating N or more preset first tasks, where the N is a natural number greater than or equal to 1.

8. The method of claim 7, wherein the setting the first instruction comprises generating 3N first instructions and applying three instructions per task.

9. The method of claim 8, wherein the setting of the first instruction tuning dataset comprises generating 34 NLU tasks and 17 NLG tasks based on data collected from one or more of AIHub1, KorPora2, GIthub, Huggingface, KLUE3, Korquad4, ETRI5, Modu's Corpus, and KoBest.

10. The method of claim 9, wherein the LLM uses a multi-lingual model.

11. A method for a computing system comprising a memory and a processor to perform instruction tuning of a large language model (LLM) using heterogeneous languages, the method comprising:
setting a first instruction tuning dataset comprising one or more first tasks formed in a first language using metadata;
setting a second instruction tuning dataset comprising one or more second tasks formed in a second language;
generating a cross-language instruction;
performing instruction tuning on the first instruction tuning dataset and the second instruction tuning dataset using the cross-language instruction; and
performing an inference on data input to the language model by applying the cross-language instruction to the first instruction tuning dataset and the second instruction tuning dataset,
wherein the generating the cross-language instruction comprises:
generating one or more first instructions written in the first language; and
generating one or more second instructions written in the second language,
wherein the performing the instruction tuning comprises:
performing instruction tuning on the second instruction tuning dataset using the first instruction; and
performing instruction tuning on the first instruction tuning dataset using the second instruction,
wherein the performing the inference comprises performing an inference by applying the first instruction to the second instruction tuning dataset and applying the second instruction to the first instruction tuning dataset, and
wherein the first instruction and the second instruction are set to have the same format.

12. The method of claim 11, wherein the setting the first instruction tuning dataset comprises generating N or more preset first tasks, where the N is a natural number greater than or equal to 1.

13. The method of claim 12, wherein the generating the first instruction comprises generating 3N first instructions and applying three instructions per task.

14. The method of claim 13, wherein the setting of the first instruction tuning dataset comprises generating 34 NLU tasks and 17 NLG tasks based on data collected from one or more of AIHub1, KorPora2, GIthub, Huggingface, KLUE3, Korquad4, ETRI5, Modu's Corpus , and KoBest.

15. The method of claim 14, wherein the language model uses a multi-lingual model.

16. A system for performing instruction tuning using heterogeneous languages, the system comprising:
at least one memory; and
at least one processor for performing instruction tuning of a language model using the heterogeneous languages by reading out at least one application stored in the memory, wherein the processor comprises instructions for:
setting a first instruction tuning dataset comprising one or more first tasks formed in a first language using metadata;
setting a second instruction tuning dataset comprising one or more second tasks formed in a second language;
generating a cross-language instruction comprising one or more first instructions written in the first language and one or more second instructions written in the second language;
performing instruction tuning on the first instruction tuning dataset and the second instruction tuning dataset using the cross-language instruction; and
performing an inference on data input to the language model by applying the cross-language instruction to the first instruction tuning dataset and the second instruction tuning dataset,
wherein the processor is configured to:
perform instruction tuning on the second instruction tuning dataset using the first instruction, performing instruction tuning on the first instruction tuning dataset using the second instruction,
perform an inference by applying the first instruction to the second instruction tuning dataset and applying the second instruction to the first instruction tuning dataset, and
wherein the first instruction and the second instruction are set to have the same format.

17. A computing device comprising:
at least one memory; and
at least one processor for performing instruction tuning of a language model using heterogeneous languages by reading out at least one application stored in the memory, wherein instructions of the processor comprise instructions for:
setting a first instruction tuning dataset comprising one or more first tasks formed in a first language using metadata;
setting a second instruction tuning dataset comprising one or more second tasks formed in a second language;
generating a cross-language instruction;
performing instruction tuning on the first instruction tuning dataset and the second instruction tuning dataset using the cross-language instruction; and
performing an inference on data input to the language model by applying the cross-language instruction to the first instruction tuning dataset and the second instruction tuning dataset, wherein the generating the cross-language instruction comprises:
generating one or more first instructions written in the first language; and
generating one or more second instructions written in the second language,
wherein the performing the instruction tuning comprises performing instruction tuning on the second instruction tuning dataset using the first instruction and performing instruction tuning on the first instruction tuning dataset using the second instruction,
wherein the performing the inference comprises performing an inference by applying the first instruction to the second instruction tuning dataset and applying the second instruction to the first instruction tuning dataset, and
wherein the first instruction and the second instruction are set to have the same format.
